# EUROPEAN PATENT APPLICATION

(11) **EP 4 610 327 A1**
(43) Date of publication of application: **03.09.2025**
(21) Application number: 24382225.1
(22) Date of filing: 01.03.2024
(51) Int. Cl.: C09K 5/10, C09K 5/06, A61F 7/00

(54) **COOLANT COMPOSITION**

(71) Applicant: Keep Kool Technology, SL, 08840 Viladecans (ES)
(72) Inventor: BERNARD JACOB, Néstor Ignace, 08759 Vallirana (ES)
(74) Representative: Torner, Juncosa I Associats, SL

(57) **Abstract**

The present disclosure relates to a coolant composition comprising glycerol; menthol; tetradecane; an alcohol; and water. The present disclosure also relates to a method to obtain a coolant composition comprising the steps of dissolving glycerol in water to obtain a first solution, dissolving menthol in alcohol to obtain a second solution, mixing the first and second solution to obtain a third solution, and adding tetradecane to the third solution to obtain the coolant composition. The present disclosure also relates to an isothermal container for preserving and/or transporting perishable or heat-sensitive products comprising at least one product storage compartment adapted and configured to store perishable or heat-sensitive products, and a cooling device comprising a reserve of a cryogenic fluid in connection with a cryogenic circuit, and a heat accumulator in thermal communication with the interior of the product storage compartment and in thermal contact with the cryogenic circuit, wherein the heat accumulator comprises the coolant composition described herein.

## Description

### TECHNICAL FIELD

The present disclosure is related to coolant compositions, articles of manufacture derived from such compositions and to an isothermal container for preserving and/or transporting perishable or heat-sensitive products.

### BACKGROUND ART

Coolant compositions are commonly used in various industries, serving the purpose of removing excess heat generated during a variety of processes. For example, coolant compositions are widely used, for instance, in automotive engines to regulate the temperature and prevent overheating. Coolant compositions are used in industrial heat exchangers to maintain optimal temperatures, ensuring efficient operation of machinery, and preventing damage due to overheating. Coolant compositions may be employed in electronic devices and computer systems to dissipate heat generated by their components.

A variety of compounds are known to provide a cooling sensation when ingested or contacted with the body. One of such compound is menthol, that has a unique ability to activate cold-sensitive receptors in the skin and mucous membranes, particularly those associated with the TRPM8 protein. When menthol comes into contact with these receptors, it generates a cooling sensation.

Therefore, several formulations comprising menthol have been developed and reported in the technical literature as coolant compositions. For instance, WO2012100811A1 discloses a coolant composition comprising glycerol, an aqueous solution of menthol, calcium hydroxide, barium hydroxide and water, together with an article of manufacture with improved coolant properties comprising the coolant composition.

DE19848031A1 discloses a skin care product consisting of a mixture of ethanol, glycerin, camphor, menthol, panthenol and water.

WO9629062A1 discloses a cold-sensitive paste characterized in that menthol and ethanol are blended in a weight ratio of 1:0,5 to 1:10 to a plaster composition containing a water-soluble polymer substance, a polyhydric alcohol and water.

FR2658415A1 discloses a solution for cold wraps used in cryotherapy and characterized in that it is obtained by dissolution of camphor and menthol in alcohol and dissolution of calcium chloride, potassium iodide and sodium chloride in water.

A limitation of the coolant compositions currently available is their limited ability to be safely applied in a plurality of application areas.

Moreover, the use of isothermal boxes or containers with good thermal insulation is well known in the field of transporting perishable goods, those that must be transported under controlled temperature conditions.

These boxes or containers must be constructed in such a way as to ensure a minimum K value that minimizes the need for external energy input for the maintenance of the internal temperature, to ensure the proper preservation of the products, be they food, medicines or others.

The way to provide cold can be of various types, in the most common construction for transport by ship or road over medium or long distances, the box or container has a mechanical refrigeration equipment that, thanks to the circulation of a gas in a closed circuit consisting of an evaporator unit and a condenser unit, manages to remove the heat from inside the box or container to the ambient air. The mechanical refrigeration equipment consumes energy that must be supplied by the ship or truck.

When road transport is of the so-called "last mile" type, trucks or isothermal vans sometimes use cold accumulation plates that are recharged at night in the company's freezers and are preferably placed in the upper part of the box to provide the necessary cold during the delivery day.

For instance, US2019241348A1 discloses an isothermal container for preserving and/or transporting perishable or heat-sensitive products comprising a cryogenic compartment, a product storage compartment, at least one Seebeck module and at least one fan positioned within the product compartment. The cryogenic compartment is adapted and configured to accept a mass of a cryogen (dry ice).

WO2013/182766 discloses a method for managing the operation of a refrigerated transport truck for heat-sensitive products where the truck is equipped with: at least one product storage room, a reserve of a cryogenic fluid such as liquid nitrogen, a heat exchanger system in which the cryogenic fluid circulates, an exchanger system comprising a set of one or more exchangers; as well as an air circulation system, for example of the fan type, capable of bringing the air internal to the chamber into contact with the cold walls of the exchangers of the assembly, wherein a measurement or evaluation of the surface temperature of at least one of the exchangers of the truck's exchanger system is carried out, and this surface temperature is taken into account to react if necessary on one or each of the following parameters: the ventilation power of the ventilation means associated with the exchanger considered, and the flow rate of cryogen supplying the exchanger considered.

There is, however, room for improvement in the systems for refrigeration specially with regards to the way the cooling takes place therein.

### SUMMARY

In order to address one or more of the foregoing problems, one aspect of the present disclosure relates to a coolant composition comprising: glycerol; menthol; tetradecane; an alcohol; and water.

In a second aspect, the present disclosure relates to an article of manufacture characterized by containing the packaged coolant composition referred hereinabove.

In a third aspect, the present disclosure relates to a method to obtain a coolant composition comprising the steps of (a) dissolving glycerol in water to obtain a first solution, (b) dissolving menthol in alcohol to obtain a second solution, (c) mixing the first and second solution to obtain a third solution, and (d) adding tetradecane to the third solution to obtain the coolant composition.

In a fourth aspect, the present disclosure relates to an isothermal container for preserving and/or transporting perishable or heat-sensitive products comprising: at least one product storage compartment adapted and configured to store perishable or heat-sensitive products, and a cooling device comprising a reserve of a cryogenic fluid in connection with a cryogenic circuit, and a heat accumulator in thermal communication with the interior of the product storage compartment and in thermal contact with the cryogenic circuit, wherein the heat accumulator comprises the coolant composition referred hereinabove.

### BRIEF DESCRIPTION OF THE FIGURES

The foregoing and other advantages and features will be more fully understood from the following detailed description of an embodiment with reference to the accompanying drawings, to be taken in an illustrative and non-limitative manner, in which:
FIG. 1 schematically shows an isothermal container comprising the coolant composition described herein.
FIG. 2 schematically shows an exploded view of the heat accumulator comprising the coolant composition described herein.
FIG. 3 schematically shows a diagram of a part of the isothermal container comprising temperature sensors and an electronic controller.

### DETAILED DESCRIPTION

The present disclosure relates to coolant compositions, packages of such compositions, and articles of manufacture derived from the coolant compositions. The coolant compositions are based on a combination of glycerol, water and menthol.

The coolant composition as disclosed herein comprises glycerol; menthol; tetradecane; an alcohol; and water.

Glycerol is a chemical compound commonly called glycerin or glycerine. It is a colorless, odorless, viscous liquid that is widely used in pharmaceutical formulations. Glycerol is used in the disclosed composition to maintain and absorb the temperature applied.

Menthol is an organic compound made synthetically or obtained from oil or mints. It is a waxy, clear or white crystalline substance. Menthol is responsible for the cooling sensation that provokes when in contact with the body.

Tetradecane is an alkane hydrocarbon. Tetradecane has a melting point of approximately 5.9 °C and a boiling point of 253.5 °C. Under standard temperature and pressure conditions (20°C, 1 atm) tetradecane is liquid. This wide liquid range makes it useful for refrigeration applications, especially in climates ranging from slightly freezing to very warm temperatures, such as the Mediterranean.

Moreover, tetradecane has been found to have an adequate capacity to absorb and release heat. Ideal refrigerants have high specific heats, which means they can absorb a large amount of heat without a significant temperature rise. Tetradecane has a specific heat capacity value of 2.14 J/g°C.

The inventors have found that the use of tetradecane as phase change modifier in the coolant composition is particularly advantageous.

This compound is included in the composition so as to obtain a composition that increases the time in which the composition is at a temperature of between 5 and 6 degrees Celsius.

Tetradecane is used in the present composition as phase change material. Phase change materials (PCMs) are substances which absorb or release large amounts of so-called "latent" heat when they go through a change in their physical state, i.e. from solid to liquid and vice versa. Therefore, during the phase change of tetradecane, temperature will be maintained almost at a constant value near the melting point. This is very relevant when the liquid composition as disclosed herein has been refrigerated at e.g. -18°C and is then applied at room temperature to e.g. a part of the body in need. Likewise, the composition herein described comprising tetradecane has been found to be able to maintain an almost constant temperature in the range of temperature between 5 and 6 degrees Celsius and may be able to maintain a e.g. room or a container at a temperature specially important for refrigerated goods, the same temperature that is targeted in e.g. domestic refrigerators. The temperature of the composition starts increasing and the presence of tetradecane in the composition increases the time the composition stays cold and improves the effect of such composition.

The alcohol of the present disclosure is preferably selected from ethanol and isopropanol.

The coolant composition may also further comprise aloe vera gel, menthyl lactate, camphor, propylene glycol and/or combinations thereof.

Aloe vera gel is a gel made from *Aloe vera* plant species that is typically used to make topical medications for skin conditions, providing relief.

Menthyl lactate (Frescolat^{®}) is the lactic ester of menthol. It has several applications e.g. in cosmetics, providing e.g. with a refreshing and soothing effect in the skin.

Camphor is a terpenoid and a cyclic ketone and has been used in traditional medicine with different indications, such as decongestant and to treat sprains, swellings and inflammation.

Propylene glycol is a viscous, colorless liquid, which is nearly odorless but possesses a faintly sweet taste. Is a diol with very low volatility and is used in several applications such as in food and drug industries and as an antifreeze, since it lowers the freezing point of water when mixed therein.

Moreover, the coolant composition disclosed herein may further comprise a salt, typically an inorganic salt. The salt may be preferably selected from the group consisting of calcium chloride, sodium chloride, ammonium nitrate and combinations thereof.

The compositions as disclosed above are typically in the liquid state at a temperature of 20°C and a pressure of 1 atm (standard conditions).

The present disclosure also discloses an embodiment of the liquid composition with example percentages. According to this embodiment, the coolant composition comprises: glycerol from about 1.5% to 6% by weight of the composition, menthol from about to 0.1% to 1% by weight of the composition, tetradecane from about 3% to 10% by weight of the composition, alcohol from 0.5% to 2.5% by weight of the composition, and water being the rest of the composition, from about 60% to 90% by weight. The coolant composition may further comprise aloe vera gel from about 0.5% to 2.5% by weight of the composition, menthyl lactate from about 0.1% to 1% by weight of the composition, camphor from about 0.5% to 2.5% by weight of the composition and propylene glycol from about 2% to 9% by weight of the composition.

The coolant composition as disclosed herein may further comprise a polymer such as sodium polyacrylate, potassium polyacrylate and/or combinations thereof to obtain a gel having coolant properties.

Sodium polyacrylate is also named acrylic sodium salt polymer, while potassium polyacrylate is also named acrylic potassium salt polymer. Both polyacrylates, both polymers, have the ability to absorb as much as 200 to 300 times its mass in water, thus being responsible for converting the composition form its liquid state to a gel.

Therefore, the coolant composition may further comprise sodium polyacrylate, potassium polyacrylate or a combination thereof in a proportion of from about 0.1% to 2% by weight of the composition.

The present disclosure also relates to an article of manufacture characterized by containing a packaged coolant composition as described herein.

The present disclosure relates to a packaged coolant. The packaged design is used for the coolant in its liquid state or very low viscosity state. To obtain a packaged article of manufacture that can be used in a plurality of applications, the liquid composition may be inserted into a porous material absorbing element, preferably a sponge, that is the surrounded and protected by an external waterproof material. The external waterproof material is chosen in order to o enhance the coolant action of the overall article of manufacture by 1) protecting the underlying chemical composition and isolating it from the external environment in order to increase the duration of action, and 2) having thermal properties such as high thermal conductivity. Alternatively, for other particular applications the gel is inserted directly into the interior of the external element and no porous material absorbing element, i.e. no sponge, is used.

While a particular embodiment of the solid composition has been described, it is understood that, after learning the teachings contained in this application with the disclosed embodiments, modifications and generalizations will be apparent to those skilled in the art without departing from the spirit of the disclosed embodiments.

The coolant composition can be packaged as described above. The form factor, industrial design, ornamental design, and engineering design of the package is adapted for a particular use and application area. The packaged composition can be used to replace the conventional cushion, sponge, or foam included in conventional products in order to create functionally equivalent improved articles of manufacture which have the additional benefit of having a coolant property.

The duration of action of the coolant is temporary and it requires a temperature differential. The coolant composition and the associated articles of manufacture are designed to provide a coolness sensation over a limited time duration.

The present invention also relates to a method to obtain a coolant composition. This method comprises the steps of (a) dissolving glycerol in water to obtain a first solution, (b) dissolving menthol in alcohol to obtain a second solution, (c) mixing the first and second solution to obtain a third solution, and (d) adding tetradecane to the third solution to obtain the coolant composition.

The method as disclosed therein may further comprise dissolving aloe vera gel and/or propylene glycol in water in step (a) and/or dissolving camphor and/or menthyl lactate in alcohol in step (b).

In order to obtain a gel with coolant properties, sodium polyacrylate, potassium polyacrylate and/or combinations thereof are added to the coolant composition in a further step (e).

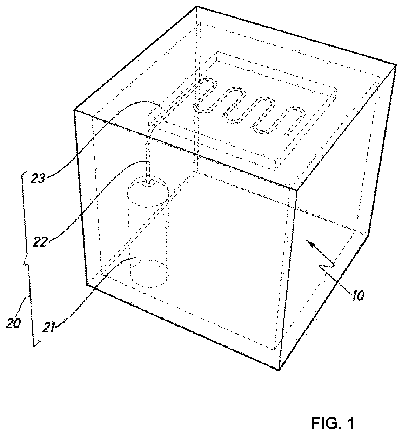

The present disclosure, as shown in FIG. 1, also relates to an isothermal container for preserving and/or transporting perishable or heat-sensitive products comprising: at least one product storage compartment 10 adapted and configured to store perishable or heat-sensitive products, and a cooling device 20 comprising a reserve of a cryogenic fluid 21 in connection with a cryogenic circuit 22, and a heat accumulator 23 in thermal communication with the interior of the product storage compartment 10 and in thermal contact with the cryogenic circuit 22, wherein the heat accumulator 23 comprises the coolant composition as defined herein.

The isothermal container disclosed herein may be a portable refrigeration system for transporting refrigerated cargo, for instance in a truck.

The cryogenic fluid is preferably liquid nitrogen, and is the cooling source, being operatively in contact with the heat accumulator 23 thanks to the cryogenic circuit 22.

In a preferred embodiment, the part of the cryogenic circuit 22 in contact with the heat accumulator 23 has the form of a serpentine.

The heat accumulator 23 may preferably comprise at least two packaged articles of the coolant composition as described herein.

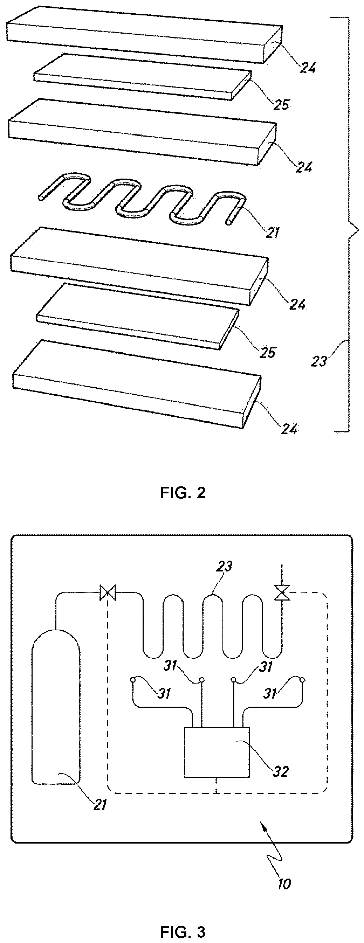

The heat accumulator 23 may preferably have the configuration as shown in FIG. 2. The cryogenic circuit 22 may be covered by two blocks 24. Such blocks 24 are each in contact with a packaged article comprising the coolant composition 25. At the same time, the each of the packaged articles comprising the coolant composition 25 are in contact and covered each with at least one other metallic block 24. In an alternative embodiment, two packaged articles comprising the coolant composition 25 are disposed between the two blocks 24. These two packaged articles comprising the coolant composition 25 may be preferably disposed side by side.

The blocks 24 are of a thermally conductive material. Preferably, the blocks 24 are metallic, for instance, but not limited to, stainless steel, wrought iron, iron, aluminum bronze, copper brass, aluminum.

Moreover, as shown in FIG. 3, the isothermal container may include temperature sensors 31 that may be distributed in the product storage compartment 10 so that a real-time measurement of the temperature takes places. Those temperature sensors 31 are connected to an electronic controller 32 that is configured to actuate on the valve regulating the entrance of the cryogenic fluid 21 in the reserve of the cryogenic fluid 21. The amount of cryogenic fluid 21 dispensed by the reserve of the cryogenic fluid 21 is modulated by the electronic controller 32, depending on the temperature measurements obtained by the temperature sensors 31 and received by the electronic controller 32.

## Claims

1. A coolant composition comprising:
glycerol;
menthol;
tetradecane;
an alcohol; and
water.

2. The coolant composition according to claim 2, wherein the alcohol is selected from ethanol and/or isopropanol.

3. The coolant composition according to claim 1 or 2, further comprising aloe vera gel, menthyl lactate, camphor, propylene glycol and/or combinations thereof.

4. The coolant composition according to any one of the previous claims, further comprising a salt preferably selected from the group consisting of calcium chloride, sodium chloride, ammonium nitrate and combinations thereof.

5. The coolant composition according to any one of the previous claims, further comprising sodium polyacrylate and/or potassium polyacrylate resulting in a gel with coolant properties.

6. The coolant composition according to any one of claims 1 to 5, wherein glycerol is 1.5-6% by weight, menthol is 0.1-1% by weight, tetradecane is 3-10% by weight, alcohol is 0.5-2.5% by weight and water is 60-90% by weight.

7. The coolant composition according to any one of claims 3 to 6, wherein aloe vera gel is 0.5-2.5% by weight, menthyl lactate is 0.1-1% by weight, camphor is 0.5-2.5% by weight and propylene glycol is 2-9% by weight.

8. The coolant composition according to any one of claims 4 to 7, wherein sodium polyacrylate and/or potassium polyacrylate are 0.1-2% by weight.

9. An article of manufacture **characterized by** containing a packaged coolant composition according to any one of claims 1 to 8.

10. A method to obtain a coolant composition comprising the steps of
(a) dissolving glycerol in water to obtain a first solution,
(b) dissolving menthol in alcohol to obtain a second solution,
(c) mixing the first and second solution to obtain a third solution, and
(d) adding tetradecane to the third solution to obtain the coolant composition.

11. The method according to claim 10, further comprising dissolving aloe vera gel and/or propylene glycol in water in step (a) and/or dissolving camphor and/or menthyl lactate in alcohol in step (b).

12. A method to obtain a gel with coolant properties comprising the steps of (a) to (d) as defined in claims 10 and 11, comprising a further step of
(e) adding sodium polyacrylate and/or potassium polyacrylate to the coolant composition.

13. An isothermal container for preserving and/or transporting perishable or heat-sensitive products comprising:
at least one product storage compartment (10) adapted and configured to store perishable or heat-sensitive products, and
a cooling device (20) comprising
a reserve of a cryogenic fluid (21) in connection with a cryogenic circuit (22), and
a heat accumulator (23) in thermal communication with the interior of the product storage compartment (10) and in thermal contact with the cryogenic circuit (22),
wherein the heat accumulator (23) comprises the coolant composition defined in claims 1 to 8.

14. The isothermal container according to claim 13, wherein the cryogenic fluid (21) is liquid nitrogen.
